# EUROPEAN PATENT SPECIFICATION

(11) **EP 2 550 673 B1**
(45) Date of publication and mention of the grant of the patent: **17.09.2014**
(21) Application number: 11720210.1
(22) Date of filing: 20.03.2011
(51) Int. Cl.: H01J 65/04, F21S 8/00, F21V 21/15

(54) **PLASMA LIGHT SOURCE AUTOMATED LUMINAIRE**
AUTOMATISIERTE LEUCHTE MIT PLASMALICHTQUELLE
LUMINAIRE AUTOMATISÉ À SOURCE DE LUMIÈRE À PLASMA

(30) Priority: 22.03.2010 US 316332 P
(43) Date of publication of application: 30.01.2013
(73) Proprietor: Robe Lighting, Inc, Sunrise, FL 33325 (US)
(72) Inventor: JURIK, Pavel, Austin, Texas 78720 (US); VALCHAR, Josef, Austin, Texas 78720 (US)
(74) Representative: Käck, Jürgen
(86) International application number: PCT/US2011/029123
(87) International publication number: WO 2011/119452

(56) References cited:
- EP-A2- 0 772 226
- EP-A2- 2 177 817
- DE-A1- 19 736 189
- US-A1- 2003 085 671
- US-A1- 2008 062 681
- "How Light Emitting Plasma(TM) Works", , 15 May 2010 (2010-05-15), pages 1-2, XP55001463, Retrieved from the Internet: URL:http://liveweb.archive.org/http://www. luxim.com/pdfs/TB1.pdf [retrieved on 2011-06-27]

## Description

### RELATED APPLICATION

This application is a utility filing claiming priority of US provisional application 61/316,332 filed on 22 March 2010.

### TECHNICAL FIELD OF THE INVENTION

The present invention generally relates to an automated luminaire, specifically to a luminaire utilizing a plasma light source.

### BACKGROUND OF THE INVENTION

Luminaires with automated and remotely controllable functionality are well known in the entertainment and architectural lighting markets. Such products are commonly used in theatres, television studios, concerts, theme parks, night clubs and other venues. A typical product will typically provide control over the pan and tilt functions of the luminaire allowing the operator to control the direction the luminaire is pointing and thus the position of the light beam on the stage or in the studio. This position control is often done via control of the luminaire's position in two orthogonal rotational axes usually referred to as pan and tilt. Many products provide control over other parameters such as the intensity, color, focus, beam size, beam shape and beam pattern. The beam pattern is often provided by a stencil or slide called a gobo which may be a steel, aluminum or etched glass pattern. The products manufactured by Robe Show Lighting such as the ColorSpot 700E are typical of the art.

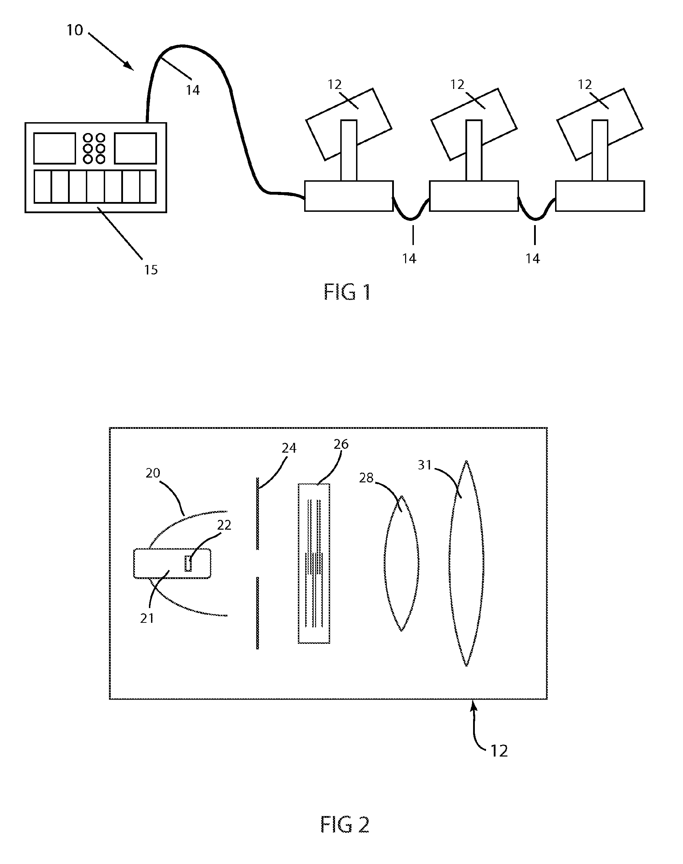

**Figure 1** illustrates a typical multiparameter automated luminaire system **10**. These systems commonly include a plurality of multiparameter automated luminaires **12** which typically each contain on-board a light source (not shown), light modulation devices, electric motors coupled to mechanical drives systems and control electronics (not shown). In addition to being connected to mains power either directly or through a power distribution system (not shown), each luminaire is connected is series or in parallel to data link **14** to one or more control desks **15.** The luminaire system **10** is typically controlled by an operator through the control desk **15.** Consequently to effect this control both the control desk **15** and the individual luminaires typically include electronic circuitry as part of the electromechanical control system for controlling the automated lighting parameters.

**Figure 2** illustrates a prior art automated luminaire **12.** A lamp **21** contains a light source **22** which emits light. The light is reflected and controlled by reflector **20** through an aperture or imaging gate **24.** The resultant light beam may be further constrained, shaped, colored and filtered by optical devices **26** which may include dichroic color filters, dimming shutters, and other optical devices well known in the art. The final output beam may be transmitted through output lenses **28** and **31** which may form a zoom lens system.

Such prior art automated luminaires use a variety of technologies as the light sources for the optical system. For example it is well known to use incandescent lamps, high intensity discharge lamps and LEDs as light sources in such a luminaire. These light sources suffer from a range of limitations that make them less than ideal for such an application. Incandescent lamps, for example, typically have a large filament which performs inefficiently in the small size optics typical of such a product necessitated by the requirement to pan and tilt the luminaire rapidly and thus to keep the size and weight down to a minimum. This mismatch will significantly reduce the output of the luminaire. High intensity discharge lamps often have problems with irregular or flickering arcs caused by the movement of the luminaire. This movement causes unstable convection currents within the arc tube thus disturbing the position of the arc. Arc movement like this is visible in the beam as flicker or instability in the image. High intensity discharge lamps may also have problems with being dimmed which can cause a change in color temperature and unstable arcs. Further both incandescent and high intensity discharge lamps have relatively short lives and need to be replaced very often.

Traditionally, plasma light sources are powered by a microwave generator which have a power supply incorporated with the microwave generator. This functionality typically generally causes a significant amount of heat. The nature of the functionality also requires significant weight for heat sinks. Additionally, fans are typically required, particularly if the functionality is provided within and enclosure such as the housing of a luminaire.

Furthermore, DE 197 36 189 A1 discloses an automated luminaire according to the preamble of claim 1, which has a microwave generator to stimulate plasma light emission and a filter which comprises a colored filter in radiation path of emitted light, an interference filter and a foil in the radiation path. The lighting device has a plasma lighting body and a microwave generator or amplifier unit to excite the plasma lighting body to light activity with the help of microwave radiation. A light reflector forms a light beam from the emitted light and a filter weakens spectral components selectively in chosen spectral ranges of the emitted light. Preferred spectral ranges are weakened that deviate from the spectrum of natural sunlight. The filter comprises at least one colored filter in the radiation path of the emitted light. It also comprises an interference filter and a foil in the radiation path.

EP 0 772 226 A2 discloses an ultraviolet irradiating apparatus which includes a microwave source and a power supply which energizes electrodeless discharge lamps to cause articles travelling along a conveyer to be irradiated with ultraviolet energy. The lamps may be partially inserted into a microwave cavity or may be coupled to a waveguide or coaxial line. The lamps may include an antenna arranged to equalize the intensity of ultraviolet emission through the volume of the lamp when the lamp is energized from an end. The apparatus may be used, for example, for sterilizing, sanitizing or ultraviolet curing.

US 2003/085671 A1 discloses an electrodeless lighting system which is emitting light using microwave generated in a magnetron. The lighting system comprises: a main case including a waveguide through which microwave is transmitted, a resonator coupled to an exit of the waveguide, and a bulb located in the resonator; a subsidiary case including a magnetron generating the microwave, and a high voltage generator for providing the magnetron with high voltage; and a microwave transmission cable connected from the magnetron to the waveguide for transmitting the microwave, whereby the emitting portion can be minimized by separating components which are not really needed for emitting, and lowering of performance and damage of the bulb or the resonator by infiltration of impurities such as dust can be prevented.

US 2008/062681 A1 discloses a multiparameter light which incorporates an LED (light emitting diode) tracking ring surrounding a main output lens. The LED tracking ring is capable of additive color mixing and in turn can simulate the color of the main projected light projecting from the main output aperture or output lens of the multiparameter light.

EP 2 177 817 A2 discloses a plasma light source automated luminaire employing a plasma microwave powered plasma light source employed with a collimating light collector together with other light modulating devices such as image gobos light color filters, iris, lenses beam.

There is a need for an automated luminaire using a more balanced system generating a plasma field for a plasma light source.

### SUMMARY INVENTION

The invention is defined in claim 1. Particular embodiments of the invention are set out in the dependent claims.

### BRIEF DESCRIPTION OF THE DRAWINGS

For a more complete understanding of the present invention and the advantages thereof, reference is now made to the following description taken in conjunction with the accompanying drawings in which like reference numerals indicate like features and wherein:
**FIGURE 1** illustrates a typical automated lighting system;
**FIGURE 2** illustrates a optical components of a conventional luminaire system;
**FIGURE 3** illustrates components of a plasma source luminaire;
**FIGURE 4** illustrates components of another plasma source luminaire;
**FIGURE 5** illustrates a perspective view of the luminaire illustrated in Figure 4;
**FIGURE 6** illustrates a perspective view select components of the luminaire illustrated in Figure 5;
**FIGURE 7** illustrates a components of another embodiment of a plasma source luminaire according to the invention;
**FIGURE 8** illustrates a perspective view of select components of the luminaire illustrated in Figure 7.

### DETAILED DESCRIPTION OF THE INVENTION

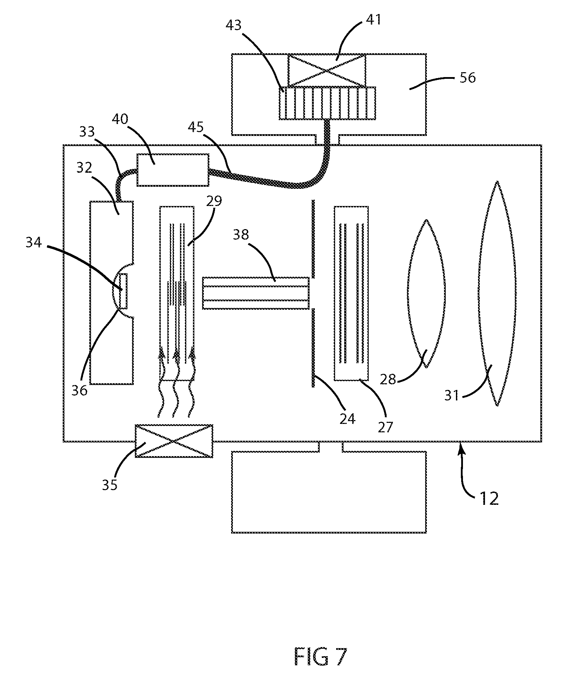

Preferred embodiments of the present invention are illustrated in figures 7-8. Like numerals being used to refer to like and corresponding parts of the various drawings.

The present invention generally relates to an automated luminaire, specifically to a luminaire utilizing a plasma light source. Plasma light sources, such as those offered by the Luxim Corporation, offer a compact light source with consequent high efficiency optical coupling to reflectors and down-stream optical systems. Additionally such lamps provide a broad spectrum of light with a good color rendering index (CRI).

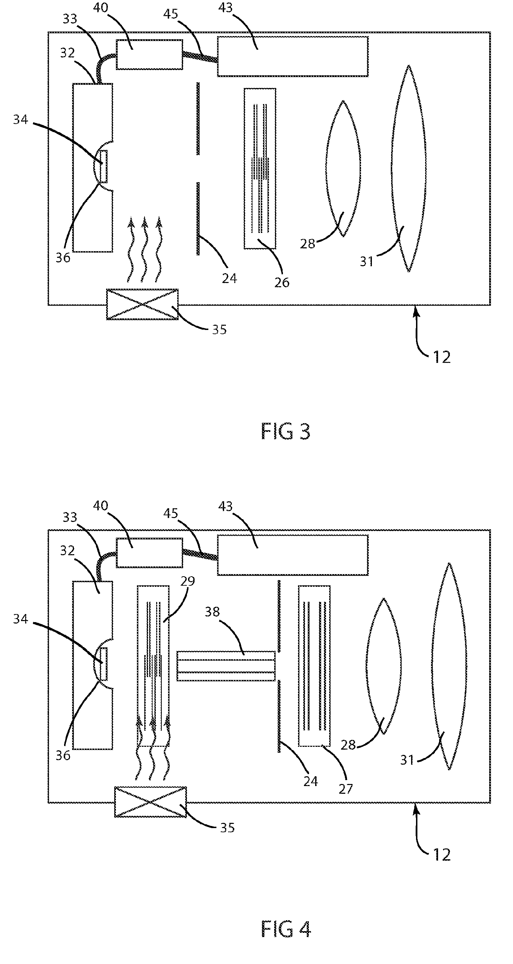

**Figure 3** illustrates a plasma lamp light source **32** not forming part of the claimed invention in an automated luminaire. A plasma lamp system **32** contains a light source capsule **34** which emits light. The light is reflected and controlled by reflector **36** through an aperture or imaging gate **24**. The resultant light beam may be further constrained, shaped, colored and filtered by optical devices **26** which may include dichroic color filters, goboes, rotating goboes, irises, framing shutters, effects glass and other optical devices well known in the art. The final output beam may be transmitted through output lenses **28** and **31** which may form a zoom lens system. Although the figures shown here are of an example with imaging optics that is capable of producing projected images from the gobo wheels and other pattern producing optical devices, the light output from the optical system may be imaging where a focused or defocused image is projected, or non-imaging where a diffuse soft edged light beam is produced. The luminaire may be used as an illumination and homogenization system with optical systems commonly known as spot, wash, beam or other optical systems known in the art.

Reflectors in automated luminaires are typically constructed of aluminum or glass however because of the construction of the plasma lamp system with well controlled cooling, reflector **36** may be constructed of a polymer or plastic. This allows a complex non-spherical shape for the reflector to be used simply and inexpensively. The small size of the plasma lamp capsule **24** and light source **32** allows for a compact high efficiency optical system.

The light source capsule **34** may be cooled either by an active cooling system (not shown) that is part of the lamp system **32** or cooling may be provided by the system integrated in the luminaire **12** and may include fans **35** which may also be responsible for general cooling of the optical systems **24, 26, 28** and **31** as well as electronic circuitry and motor systems (not shown). Cooling systems may be active using feedback from the lamp control system and temperature probes measuring the ambient temperature in the luminaire **12**.

Such systems may use the required lamp **32** power from power supply **43** to control the speed of cooling fans **42**. For example, if the user commands the lamp to dim down to 20% output through the control console and link as shown in **Figure 1** then the cooling system may respond to this by reducing fan **42** speed to a level commensurate with the power level from power supply **43** being provided to lamp **32**. The commensurate level of fan speed is determined as a function of the heat power to heat generation curve of the source taken together with the cooling to fan speed curve(s) of for an internal/external temperature differential. Components of the lamp system may be cooled through conduction and convection through heat sinks or thermally conductive outer covers (not shown).

The lamp may be ignited, controlled in power, doused and re-ignited through commands received over the communication link **14** shown in **Figure 1**. Such commands may be transmitted over protocols including but not limited to industry standard protocols DMX512, RDM, ACN, Artnet, MIDI and/or Ethernet.

Further, the lamp **32** may be controlled through such communication protocols such that:
A. The lamp is dimmed over a continuous and contiguous range from 100% down to approximately 20% (depending on the light sources capabilities).
B. The lamp is step-changed rapidly between a first output intensity and a second output intensity. This type of intensity change is commonly known as a strobe effect. The Plasma lamp offers advantages for this kind of operation because of the very rapid response time of the plasma capsule to requested changes in power and thus output intensity.
C. The lamp strobing in (B) is may be synchronized with a mechanical dimming or blackout system or with an optical iris.

Further advantages of the plasma lamp system may include:
A. The plasma lamp is insensitive to changes of orientation. Prior art lamps may change intensity due to arc wander or suffer from overheating of some components when the lamp is positioned at some orientations. The plasma system does not suffer from these problems.
B. The plasma lamp has a very long life - many times more than high intensity discharge or incandescent prior art systems.

**Figure 4** illustrates a further example not forming part of the invention incorporating light collector/integrator **38**. Light integrator **38** is a device utilizing internal reflection so as to collect homogenize and constrain and conduct the light from plasma light source **34** and reflector **36** to other optical element(s). Light integrator **38** may be a hollow tube with a reflective inner surface such that light impinging into the entry port may be reflected multiple times along the tube before leaving at the exit port. Optical devices **29** may comprise dichroic color filters, color mixing filters, dimming flags or shutters and other optical devices known in the art where homogenization of the light beam after passing through them is advantageous. Optical devices **27** may comprise goboes, rotating goboes, irises, framing shutters, effects glass, beam shapers and other optical devices known in the art that do not require subsequent homogenization of the light beam. For example optical devices that produce images do not require downstream homogenization whereas those that color or shape the light beam in a non-imaging manner typically do require it. As light is reflected down the tube in different directions from the light source the light beams will mix forming a composite beam where different colors of light are homogenized and an evenly colored beam is emitted through aperture **24**. Light integrator **38** may be a square tube, a hexagonal tube, a circular tube, an octagonal tube or a tube of any other cross section. Further, light integrator **38** may be a solid rod constructed of glass, transparent plastic or other optically transparent material where the reflection of the incident light beam within the rod is due to total internal reflection (TIR) from the interface between the material of the rod and the surrounding air. The integrating rods may be circular, other polygonal or irregular cross-sectional shape.

The homogenized light exits from the light integrator **38** and may then be further controlled and directed by other optical elements **24, 27, 28** and **31**. The selection of specific aperture **24,** optical devices **27,** and lenses **28** and **31** will vary dependant on the intended use of the luminaire as, for example, a spot, wash or beam unit and are illustrated herein as examples only. The inclusion, omission and choice of aperture **24,** optical devices **27,** and lenses **28** and **31** are exemplary only.

Lamp **32** shown in both **Figure 3** and **Figure 4** is provided with microwaves from microwave generator **40** through wave guide **33.** Microwave generator **40** is provided with electrical power from power supply **43** through electrical connection **45**. In the examples shown in **Figure 3** and **Figure 4** the power supply **43** is mounted close to microwave generator **40** and power supply **40** and microwave generator **43** may be contained within the same power module. It is advantageous to keep wave guide **33** as short as possible. Waveguide **33** may be rigid or semi-rigid and, even though flexible wave guides are known, they are expensive and difficult to use and guide around confined spaces.

The connection **45** between power supply **43** and microwave generator **40** is not so physically constrained. Connection **45** is a conventional electrical cable and thus may be flexible and as long as reasonably desired. Consequently power supply **43** may be mounted in any position either adjacent to microwave generator **40** as shown in **Figure 3** and **Figure 4** or remotely in another portion of the luminaire.

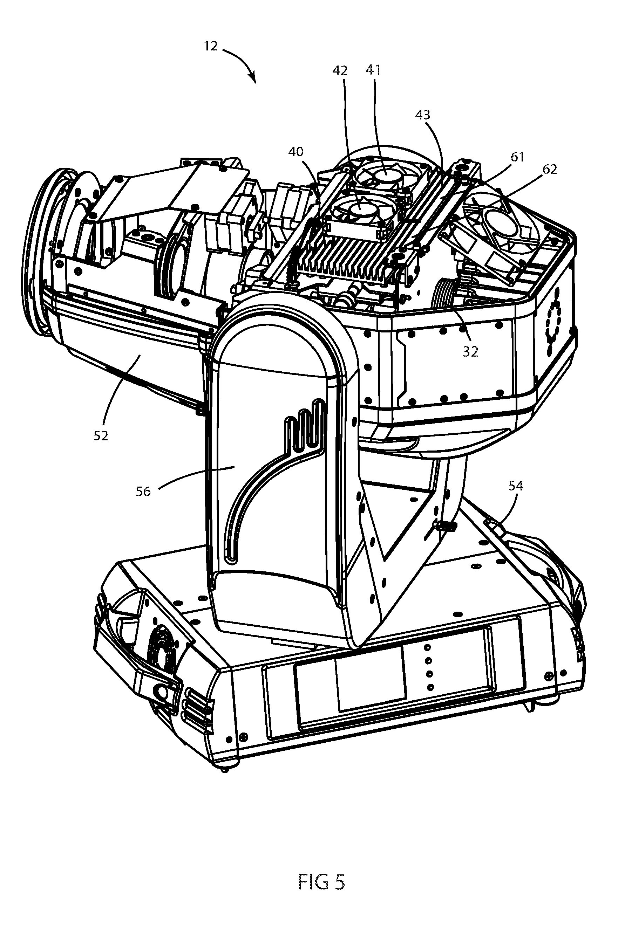

**Figure 5** is a further example not forming part of the invention. An automated luminaire **12** utilizes a plasma light source **32** with associated cooling. A combined module containing power supply **43** and microwave generator **40** for the plasma lamp may be mounted within the body of the automated luminaire **12** so as to minimize connection lengths for the microwaves supplied from the microwave generator **40** to the plasma lamp. The power supply **43** and microwave generator **40** may be cooled by fans **41** and **42** respectively. Further, the power supply **43** and microwave generator **40** may be cooled by convention and conduction through heat sinks 61 and 62 respectively (for clarity Figure 5 illustrates a single integrated heat sink for both the power supply 43 and the microwave generator 40) or thermally connection with a thermally conductive outer case (not shown) of automated luminaire **12**. The fans may be reduced or removed.

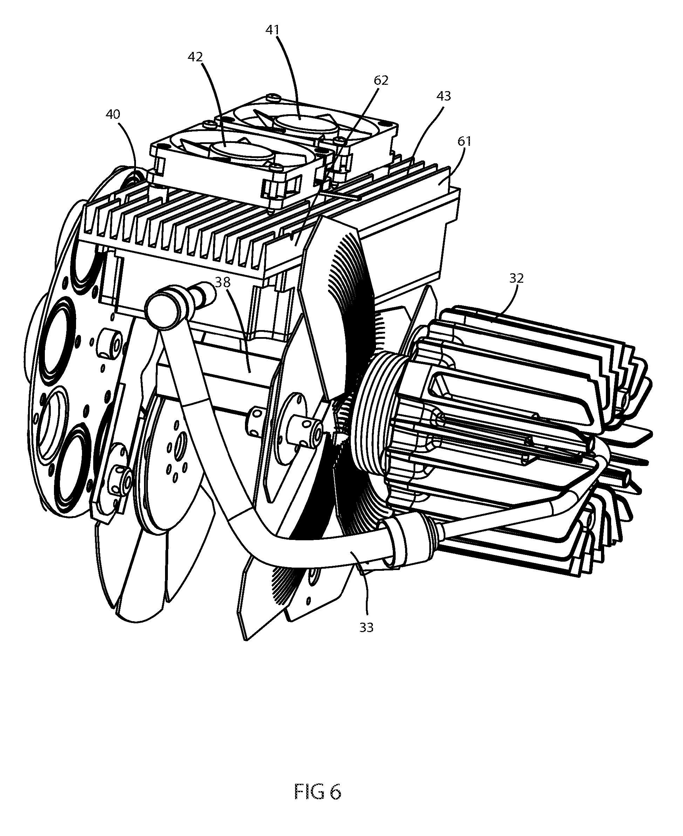

**Figure 6** illustrates a detailed perspective view of a luminaire where the microwave generator and power supply are integrated and collocated. A combined module containing lamp power supply **43** and microwave generator **40** which may be cooled by fans provides microwave energy through waveguide connection **33** to the plasma lamp assembly with its associated heat sink **32**.

**Figure 7** illustrates an embodiment of the invention in which the power supply **43** is separated from the microwave generator 40 and mounted in the luminaire yoke arm **56**. Such an arrangement with a remote power supply may provide additional space in the luminaire head allowing a higher output lamp **32** to be utilized in the same space. A further advantage of remotely mounting power supply **40** is that the contained electronics are removed from an area of high heat load generated by lamp **32** to an area of low heat load. This may reduce the cooling needs for power supply **40**.

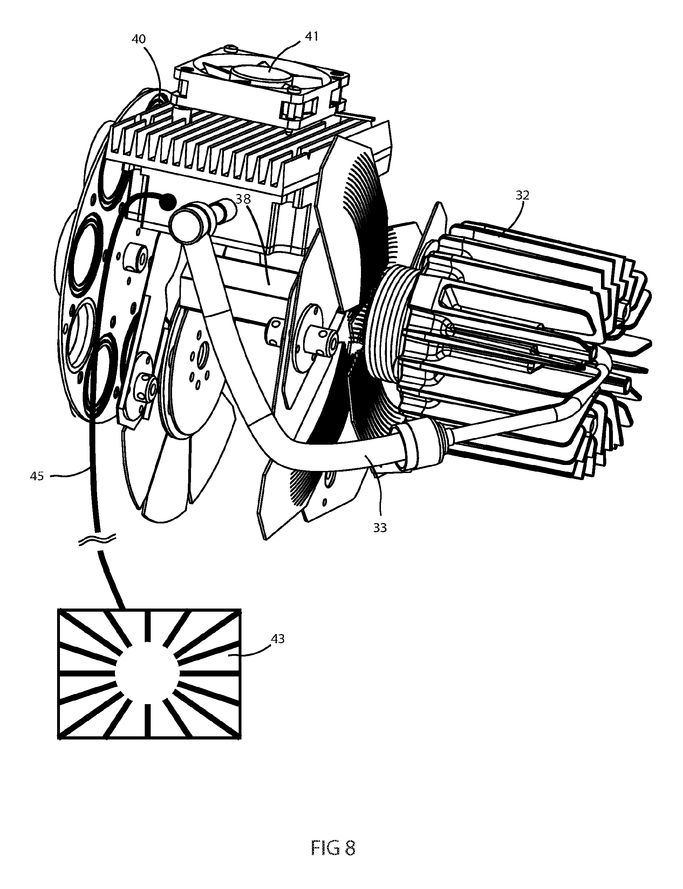

**Figure 8** illustrates select components of a luminaire of the embodiment illustrated in **Figure 7** in a detailed perspective view. In this embodiment the power supply is mounted remotely in the arm and the power supply **43** provides electrical power through flexible cable **45** to microwave generator **40.** Microwave generator **40** which may be cooled by fans provides microwave energy through waveguide connection **33** to the plasma lamp assembly with its associated heat sink **32.** Such an arrangement with a remote power supply may provide additional space in the luminaire head allowing a higher output lamp **32** to be utilized in the same space. A further advantage of remotely mounting the power supply is that the contained electronics are removed from an area of high heat load generated by lamp **32** to an area of low heat load. This may reduce the cooling needs for the power supply.

**Figure 8** illustrates the heat sink **61** on the power supply **43** to be of a radial fin design. This allows for the sink to be mounted in the arm so that the no fans may be required (unlike **Figure 7** which provides for a fan **41** for cooling the power supply **43**). The radial design has the benefit of being agnostic to the mounting position of the luminaire **12** and the rotational position of the luminaires arm **56.**

In alternative examples not forming part of the invention, the mounting of the power supply **43** may still be in the head **52** of the luminaire **12** but located in a different position from the microwave generator **40.** This separation can have the benefit of allowing for a more balanced head **52** rather than having them integrated or mounted together. For example the power supply **43** and the microwave generator could be mounted on opposite sides of the fixture head. **52**.

While the disclosure has been described with respect to a limited number of embodiments, those skilled in the art, having benefit of this disclosure, will appreciate that other embodiments may be devised which do not depart from the scope of the disclosure as disclosed herein. The disclosure has been described in detail, it should be understood that various changes, substitutions and alterations can be made hereto without departing from the scope of the disclosure.

## Claims

1. An automated luminaire (12) with
a moving head mounted on arms (56) and comprising
a microwave generated plasma light source (32) and
a microwave generator (40) mounted proximate to the light source; and
a power supply (43) connected to the microwave generator (40);
**characterized in**
**that** the power supply (43) is mounted in an arm (56) of the luminaire (12).

2. The luminaire of claim 1 wherein the power supply (43) is arranged to be cooled by cooling fans (41).

## Patentansprüche

1. Automatisierte Leuchte (12) mit
einem beweglichen Kopf, der an Armen (56) montiert ist und umfasst
eine Lichtquelle (32) mit durch Mikrowellen erzeugtem Plasma und
einen Mikrowellengenerator (40), der nahe der Lichtquelle montiert ist; und
eine Energieversorgung (43), die mit dem Mikrowellengenerator (40) verbunden ist;
**dadurch gekennzeichnet, dass**
die Energieversorgung (43) in einem Arm (56) der Leuchte (12) montiert ist.

2. Leuchte nach Anspruch 1, wobei die Energieversorgung (43) so angeordnet ist, dass sie durch Kühlgebläse (41) gekühlt wird.

## Revendications

1. Luminaire automatisé (12) avec
une tête mobile montée sur des bras (56) et comprenant
une source de lumière plasma générée par micro-ondes (32) et
un générateur hyperfréquence (40) monté à proximité de la source de lumière, et
une alimentation (43) connectée au générateur hyperfréquence (40), **caractérisé en ce que**
l'alimentation (43) est montée dans un bras (56) du luminaire (12).

2. Luminaire selon la revendication 1 dans lequel l'alimentation (43) est conçue pour être refroidie par des ventilateurs de refroidissement (41).
